# EUROPÄISCHE PATENTANMELDUNG

(11) **EP 4 748 227 A1**
(43) Veröffentlichungstag der Anmeldung: **27.05.2026**
(21) Anmeldenummer: 25194128.2
(22) Anmeldetag: 05.08.2025
(51) Int. Cl.: A01M 7/00, A01C 23/04

(54) **LANDWIRTSCHAFTLICHE MASCHINE ZUM AUSBRINGEN VON SPRITZFLÜSSIGKEIT ODER KÖRNIGEM MATERIAL**

(30) Priorität: 20.08.2024 DE 102024123693
(71) Anmelder: Amazonen-Werke H. Dreyer SE & Co. KG, 49205 Hasbergen (DE)
(72) Erfinder: Kuper, Henning, 49205 Hasbergen-Gaste (DE); Wessels, Thomas, 49205 Hasbergen-Gaste (DE)
(74) Vertreter: Heisel, Per-Christian

(57) **Zusammenfassung**

Die Erfindung betrifft eine landwirtschaftliche Maschine (1) zum Ausbringen von Spritzflüssigkeit oder körnigem Material aufweisend:
- einen Rahmen (2) zur Anordnung an einer Zugmaschine,
- ein Gestänge (3) mit mindestens einem beweglichen Ausleger (4) zum Verringern und/oder Vergrößern der Arbeitsbreite der landwirtschaftlichen Maschine (1),
- wobei der wenigstens eine Ausleger (4) mehrere Teilsegmente aufweist, die zueinander schwenkbar und/oder klappbar sind, um die Arbeitsbreite der landwirtschaftlichen Maschine (1) zu verringern und/oder zu vergrößern,
- Ausbringeinrichtungen (5) zum Ausbringen von Spritzflüssigkeit, die an dem mindestens einen Ausleger (4) angeordnet sind,
- wobei jede Ausbringeinrichtung (5) eingerichtet ist, innerhalb ihres Ausbringbereichs Spritzflüssigkeit oder körniges Material auszubringen und/oder das Ausbringen von Spritzflüssigkeit oder körnigem Material innerhalb ihres Ausbringbereichs zu unterbinden, und
- wobei die landwirtschaftliche Maschine (1) eine Ausrichtkontrolleinrichtung (6) für den mindestens einen Ausleger (4) aufweist, um die Position und/oder Ausrichtung des mindestens einen Auslegers (4) relativ zum Rahmen (2) zu kontrollieren.

## Beschreibung

Die Erfindung betrifft eine landwirtschaftliche Maschine zum Ausbringen von Spritzflüssigkeit oder körnigem Material.

Gattungsgemäße landwirtschaftliche Maschinen weisen ein Gestänge mit zwei Auslegern auf, das bzw. die sich über die Zeit deformieren können. Dies kann z. B. durch einen ungewollten Bodenkontakt geschehen. Somit sind die Ausleger nicht mehr rechtwinklig zur landwirtschaftlichen Maschine bzw. deren Rahmen orientiert.

Ferner ist es bekannt, dass derartige landwirtschaftliche Maschinen mit Kameras zur Lokalisierung von Unkräutern und/oder Nutzpflanzen ausgestattet sind.

Wenn nun das Gestänge bzw. die Ausleger nicht mehr rechtwinklig zum Rahmen der landwirtschaftlichen Maschine positioniert ist/sind, dann ist der Erfassungsbereich der Kameras, die am Gestänge/Ausleger angebracht sind, ebenfalls nicht mehr korrekt ausgerichtet. Dadurch kann es passieren, dass mithilfe der Kameras nicht mehr die richtige Ausbringeinrichtung zur Applikation eines Mittels auswählt werden kann.

Vor diesem Hintergrund ist es Aufgabe der vorliegenden Erfindung, eine landwirtschaftliche Maschine zum Ausbringen von Spritzflüssigkeit oder körnigem Material anzugeben, welche kostengünstig und materialsparend herstellbar ist sowie welche eine Überprüfung der Ausrichtung des Gestänges bzw. der Ausleger relativ zum Rahmen der landwirtschaftlichen Maschine ermöglicht.

Diese Aufgabe wird durch die Merkmale des unabhängigen Anspruchs gelöst. Weitere vorteilhafte Weiterbildungen sind Gegenstand der Unteransprüche.

Die vorliegende Erfindung umfasst eine landwirtschaftliche Maschine, wie z. B. eine Feldspritze oder ein pneumatischer Düngerstreuer, zum Ausbringen von Spritzflüssigkeit oder körnigem Material.

Dabei weist die landwirtschaftliche Maschine einen Rahmen zur Anordnung an einer Zugmaschine auf.

Ferner umfasst die landwirtschaftliche Maschine ein Gestänge mit mindestens einem Ausleger zum Verringern und/oder Vergrößern der Arbeitsbreite der landwirtschaftlichen Maschine.

Der wenigstens eine Ausleger weist mehrere Teilsegmente oder Glieder auf, die zueinander bewegbar und/oder schwenkbar und/oder klappbar sind, um die Arbeitsbreite der landwirtschaftlichen Maschine zu verringern und/oder zu vergrößern.

Auch kann der wenigstens eine Ausleger zwischen einer Arbeitsstellung, in welcher die landwirtschaftliche Maschine ein Feld mit Spritzflüssigkeit oder körnigem Material versorgen kann und/oder in welcher die Arbeitsbreite der landwirtschaftlichen Maschine maximal ist, und einer Transportstellung, in welcher die landwirtschaftliche Maschine zum Feld hin oder vom Feld weg transportiert werden kann und/oder in welcher die Arbeitsbreite der landwirtschaftliche Maschinen minimal ist, schwenkbar am Rahmen angeordnet sein.

Zudem umfasst die landwirtschaftliche Maschine Ausbringeinrichtungen, wie z. B.

Spritzdüsen, zum Ausbringen von Spritzflüssigkeit oder körnigem Material, die an dem mindestens einen Ausleger angeordnet sind. Dabei können die Ausbringeinrichtungen in regelmäßigen Abständen an dem wenigstens einen Ausleger und/oder entlang des mindestens einen Auslegers angeordnet sein.

Jede Ausbringeinrichtung ist eingerichtet, innerhalb ihres Ausbringbereichs Spritzflüssigkeit oder körniges Material auszubringen und/oder das Ausbringen von Spritzflüssigkeit oder körnigem Material innerhalb ihres Ausbringbereichs zu unterbinden. Auch sind Zustände möglich, bei denen 10, 20, 25, 35 Prozent oder eine weitere beliebe Prozentzahl der maximal zur Verfügung stehenden Ausbringmenge an Spritzflüssigkeit oder an körnigem Material durch eine Ausbringeinrichtung ausbringbar ist.

Des Weiteren weist die landwirtschaftliche Maschine eine Ausrichtkontrolleinrichtung für das Gestänge und/oder für den mindestens einen Ausleger auf, um die Position und/oder Ausrichtung des Gestänges und/oder des mindestens einen Auslegers relativ zum Rahmen zu kontrollieren. Dadurch sind Verformungen des Gestänges und/oder des mindestens einen Auslegers relativ zum Rahmen erfassbar.

Außerdem kann die landwirtschaftliche Maschine Kameras zur Erfassung eines Feldbewuchses aufweisen. Somit sind also z. B. Nutzpflanzen und Unkräuter erkennbar.

Die Kameras können an dem mindestens einen Ausleger angeordnet sein. Auch können die Kameras in regelmäßigen Abständen an dem wenigstens einen Ausleger und/oder entlang des wenigstens einen Auslegers angeordnet sein.

Des Weiteren kann vorgesehen sein, dass jede Kamera wenigstens einen Bildsensor für den sichtbaren Bereich des elektromagnetischen Spektrums umfasst.

Zudem ist es möglich, dass der wenigstens eine Bildsensor auch für den UV-Bereich des elektromagnetischen Spektrums und/oder auch für den IR-Bereich des elektromagnetischen Spektrums geeignet oder ausgebildet ist.

Die Kameras können so an dem mindestens einen Ausleger angeordnet und ein- bzw. ausgerichtet sein, dass jede Kamera einen Aufnahmebereich abdeckt, welcher die Ausbringbereiche von wenigstens zwei Ausbringeinrichtungen umfasst oder abdeckt. Somit werden also weniger Kameras für die Ausbringeinrichtungen und/oder Ausrichtkontrolleinrichtung benötigt. Dies spart Kosten und Montageaufwand. Außerdem wird dadurch die Maschine vereinfacht.

Ferner kann die Ausrichtkontrolleinrichtung ein für Kameras der landwirtschaftlichen Maschine erkennbares Signal erzeugen. Bei diesem Signal kann es sich um ein Signal im sichtbaren Bereich des elektromagnetischen Spektrums oder im UV-Bereich des elektromagnetischen Spektrums oder im IR-Bereich des elektromagnetischen Spektrums handeln.

Außerdem kann die Ausrichtkontrolleinrichtung so eingerichtet und ausgebildet sein, dass diese ein für Kameras der landwirtschaftlichen Maschine erkennbares, z. B. geometrisches, Signal erzeugt. Hierbei kann das erkennbare Signal eine Linie, ein QR-Code und/oder ein Symbol sein.

Des Weiteren kann die Ausrichtkontrolleinrichtung so eingerichtet und ausgebildet sein, dass das erkennbare Signal auf einen Boden, wie z. B. einen Feldboden oder einen mit Steinen oder Asphalt befestigten Boden, oder auf Kameras der landwirtschaftlichen Maschine selbst erzeugt wird. Bei der Erzeugung direkt auf die Kameras können störende Einflüsse von unebenen Böden einfach eliminiert werden.

Ferner kann die Ausrichtkontrolleinrichtung am Rahmen angeordnet sein. Somit ist deren Position vor relativen Veränderungen zum Rahmen bestmöglich geschützt.

Die Ausrichtkontrolleinrichtung kann eine Projektionseinrichtung umfassen, welche ein für Kameras der landwirtschaftlichen Maschine erkennbares Signal in den Aufnahmebereich jeder Kamera projiziert. Alternativ kann die Ausrichtkontrolleinrichtung eine Projektionseinrichtung umfassen, welche ein für Kameras der landwirtschaftlichen Maschine erkennbares Signal unmittelbar auf die Kameras der landwirtschaftlichen Maschine projiziert. Bei der Erzeugung direkt auf die Kameras können störende Einflüsse einfach eliminiert werden.

Des Weiteren kann die Ausrichtkontrolleinrichtung eine Auswerteeinrichtung zum Auswerten von Ist-Bilddaten, aufgenommen von Kameras der landwirtschaftlichen Maschine, und/oder von Soll-Bilddaten aufweisen.

Die Auswerteeinrichtung kann ferner eingerichtet und ausgebildet sein, aus den Ist-Bilddaten jeder Kamera der landwirtschaftlichen Maschine ein erkennbares Signal, erzeugt von der Ausrichtkontrolleinrichtung oder von deren Projektionseinrichtung, zu erkennen bzw. herauszufiltern.

Außerdem ist es möglich, dass die Auswerteeinrichtung eingerichtet und ausgebildet ist, anhand des erkennbaren und/oder erkannten Signals diejenigen Pixel eines Bildsensors einer jeden Kamera der landwirtschaftlichen Maschine zu identifizieren, die das erkennbare Signal erfassen. Dadurch ist jedes Pixel des Bildsensors, das ein erkennbares Signal erkennt, mit seinen Koordinaten auf dem Bildsensor erfassbar.

Ferner kann die Auswerteeinrichtung eingerichtet und ausgebildet sein, zu prüfen, ob die identifizierten Pixel entlang einer Pixelreihe des Bildsensors und innerhalb eines Toleranzbereichs um die Pixelreihe angeordnet sind. Dabei kann der Bildsensor Pixel aufweisen, die in Pixelreihen und Pixelspalten angeordnet sind. Für den Fall, dass die identifizierten Pixel entlang einer Pixelreihe des Bildsensors und innerhalb eines Toleranzbereichs um die Pixelreihe angeordnet sind, kann dies bedeuten, dass das Gestänge oder der mindestens eine Ausleger relativ zum Rahmen korrekt positioniert ist.

Des Weiteren kann die Auswerteeinrichtung eingerichtet und ausgebildet sein, im Falle einer Anordnung der identifizierten Pixel außerhalb eines Toleranzbereichs um die Pixelreihe eine Fehlermeldung zu initiieren. Für den Fall, dass die identifizierten Pixel entlang einer Pixelreihe des Bildsensors und außerhalb eines Toleranzbereichs um die Pixelreihe angeordnet sind, kann dies bedeuten, dass das Gestänge oder der mindestens eine Ausleger relativ zum Rahmen nicht korrekt positioniert ist.

Zudem kann die Auswerteeinrichtung eingerichtet und ausgebildet sein, bei Ausgabe einer Fehlermeldung auf Maßnahmen zur Beseitigung der Verformung des Gestänges oder des mindestens einen Auslegers hinzuweisen. Somit können einem Anwender Vorschläge dahingehend unterbreitet werden, z. B. welche Kalibrierschrauben an der landwirtschaftlichen Maschine nachzustellen sind und/oder welche Lagerungen der landwirtschaftlichen Maschine zu tauschen sind, um wieder eine perfekte Ausrichtung des Gestänges oder des mindestens einen Auslegers relativ zum Rahmen zu erzeugen.

Des Weiteren kann die Ausrichtkontrolleinrichtung eine Auswerteeinrichtung zum Auswerten von Ist-Bilddaten, aufgenommen von Kameras der landwirtschaftlichen Maschine, und/oder von Soll-Bilddaten aufweisen.

Die Auswerteeinrichtung kann eingerichtet und ausgebildet sein, Ist-Bilddaten mit Soll-Bilddaten zu vergleichen, um Abweichungen des Gestänges oder des mindestens einen Auslegers zu identifizieren.

Dabei kann die Auswerteeinrichtung einen Speicher für Ist- und/oder Soll-Bilddaten umfassen.

Soll-Bilddaten können in einem Speicher der Auswerteeinrichtung hinterlegt sein.

Ferner können die Soll-Bilddaten von Kameras der landwirtschaftlichen Maschine vor Auslieferung der landwirtschaftlichen Maschine und/oder bei Herstellung der landwirtschaftlichen Maschine aufgenommen worden sein und anschließend in dem Speicher hinterlegt worden sein. Somit ist die korrekte relative Anordnung von Gestänge oder des mindestens einen Auslegers zum Rahmen bekannt, da bei Auslieferung und/oder bei Herstellung der landwirtschaftlichen Maschine die Ausrichtung von Gestänge/Ausleger kalibriert wurde.

Alternativ ist es möglich, dass die Soll-Bilddaten mit einer computerunterstützten Methode für die landwirtschaftliche Maschine erzeugt und anschließend in dem Speicher hinterlegt wurden. Somit ist die korrekte relative Anordnung von Gestänge oder des mindestens einen Auslegers zum Rahmen bekannt.

Nachfolgend wird der oben dargestellte Erfindungsgedanke nochmals und ergänzend mit anderen Worten ausgedrückt.

Dieser Gedanke betrifft - vereinfacht dargestellt - eine landwirtschaftliche Maschine, z. B. eine Feldspritze oder einen pneumatischen Düngerstreuer, zum Ausbringen von Spritzflüssigkeit oder körnigem Material. Dabei kann die landwirtschaftliche Maschine mit einen Kamerasystem zur Lokalisierung von Unkräutern und/oder Nutzpflanzen ausgestattet sein.

Das Gestänge der landwirtschaftlichen Maschine kann sich über die Zeit immer weiter deformieren, so dass es nicht mehr rechtwinklig zur landwirtschaftlichen Maschine steht bzw. ausgerichtet ist. Dies kann z. B. durch einen ungewollten Bodenkontakt passieren.

Wenn das Gestänge nicht mehr rechtwinklig zur landwirtschaftlichen Maschine positioniert ist, dann schauen auch Kameras, die am Gestänge angebracht sind, nicht mehr genau gerade nach vorne bzw. sind diese nicht mehr exakt positioniert, um ihre Aufgabe korrekt zu erfüllen. Dadurch kann es passieren, dass mithilfe der Kameras nicht mehr die richtige Düse bzw. Ausbringeinrichtung zur Applikation eines Mittels auswählt werden kann.

Um dem entgegenzuwirken, kann die landwirtschaftliche Maschine im Feld nachkalibriert werden. Hierzu kann z. B. ein langer Streifen quer zur Fahrtrichtung auslegt werden, auf dem sehr einfach zu erkennende QR-Codes o. ä. aufgedruckt sind.

Wenn nun mit der landwirtschaftlichen Maschine an diesen Streifen herangefahren wird, sodass dieser in den Kameras zu sehen ist, dann kann bei perfekter Ausrichtung dieses Streifens in allen Kameras genau an der gleichen Stelle z. B. der QR-Code zu sehen sein. Falls dabei Abweichungen auftreten, können diese als Hinweis auf ein nicht perfekt ausgerichtetes Gestänge dienen. Dem Anwender kann dann vorgeschlagen werden, welche Kalibrierschrauben an der landwirtschaftlichen Maschine nachzustellen sind um wieder eine perfekte Ausrichtung zu erzeugen.

Nachstehend wird die Erfindung anhand eines Ausführungsbeispiels in Verbindung mit der zugehörigen Zeichnung näher erläutert. Hierbei zeigt schematisch:

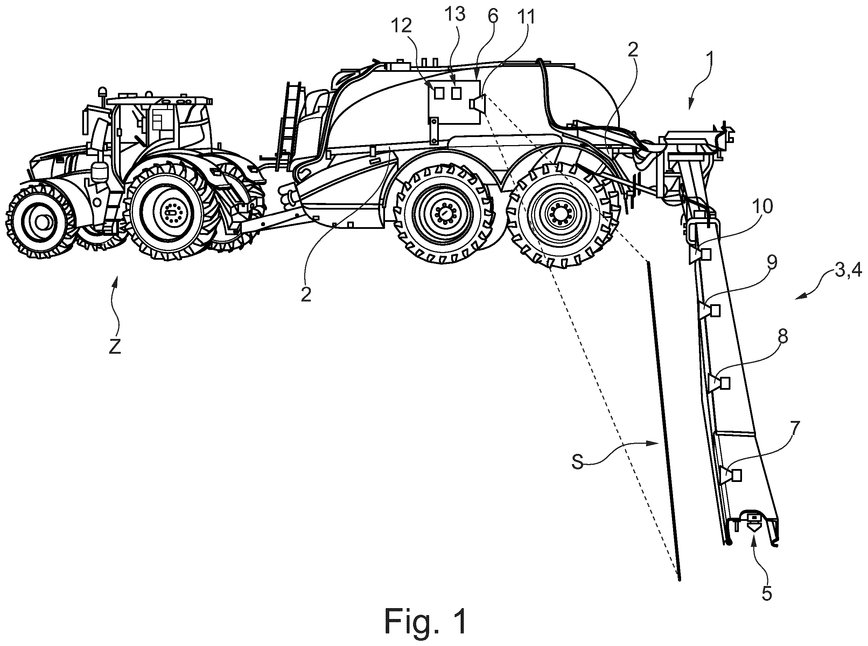

- Fig. 1: eine räumliche Seitenansicht auf eine landwirtschaftliche Maschine.

Figur 1 zeigt eine räumliche Seitenansicht auf eine landwirtschaftliche Maschine 1.

Genauer dargestellt zeigt Figur 1 eine landwirtschaftliche Maschine 1, wie z. B. eine Feldspritze, zum Ausbringen von Spritzflüssigkeit.

Die landwirtschaftliche Maschine 1 umfasst einen Rahmen 2 zur Anordnung an einer Zugmaschine sowie ein Gestänge 3 mit einem Ausleger 4 zum Verringern und/oder Vergrößern der Arbeitsbreite der landwirtschaftlichen Maschine 1.

Tatsächlich hat die landwirtschaftliche Maschine 1 zwei Ausleger 4, jedoch ist in Figur 1 nur einer zu erkennen. Der Einfachheit und Kürze halber wird in der nachfolgenden Beschreibung nur der eine sichtbare Ausleger 4 erläutert. Dennoch gelten alle Erläuterungen auch für den nicht sichtbaren, zweiten Ausleger analog.

Der Ausleger 4 hat mehrere Teilsegmente oder Glieder, die zueinander bewegbar und/oder schwenkbar und/oder klappbar sind, um die Arbeitsbreite der landwirtschaftlichen Maschine 1 zu verringern und/oder zu vergrößern.

Dabei ist der Ausleger 4 zwischen einer Arbeitsstellung, in welcher die landwirtschaftliche Maschine 1 ein Feld mit Spritzflüssigkeit versorgen kann, und einer Transportstellung, in welcher die landwirtschaftliche Maschine 1 zum Feld hin oder vom Feld weg transportiert werden kann, schwenkbar am Rahmen 2 angeordnet.

Des Weiteren zeigt Figur 1, dass die landwirtschaftliche Maschine 1 Ausbringeinrichtungen 5, wie z. B. Spritzdüsen (in Figur 1 ist nur eine Ausbringeinrichtung 5 zu erkennen), zum Ausbringen von Spritzflüssigkeit aufweist, die an dem Ausleger 4 angeordnet sind. Dabei sind die Ausbringeinrichtungen 5 in regelmäßigen Abständen an dem Ausleger 4 und entlang des Auslegers 4 angeordnet.

Jede Ausbringeinrichtung 5 ist eingerichtet, innerhalb ihres Ausbringbereichs Spritzflüssigkeit auszubringen und das Ausbringen von Spritzflüssigkeit innerhalb ihres Ausbringbereichs zu unterbinden.

Außerdem geht aus Figur 1 hervor, dass die landwirtschaftliche Maschine 1 eine Ausrichtkontrolleinrichtung 6 für das Gestänge 3 bzw. dessen Ausleger 4 aufweist, um die Position und Ausrichtung des Gestänges 3 bzw. dessen Auslegers 4 relativ zum Rahmen 2 zu kontrollieren. Dadurch sind Verformungen des Gestänges 3 bzw. des Auslegers 4 relativ zum Rahmen 2 erfassbar.

Zudem zeigt Figur 1, dass die landwirtschaftliche Maschine 1 Kameras 7-10 zur Erfassung eines Feldbewuchses aufweist. Somit sind also z. B. Nutzpflanzen und Unkräuter erkennbar.

Die Kameras 7-10 sind an dem Ausleger 4 angeordnet und in regelmäßigen Abständen an dem Ausleger 4 sowie entlang des Auslegers 4 angeordnet.

Dabei umfasst jede Kamera 7-10 einen Bildsensor für den sichtbaren Bereich des elektromagnetischen Spektrums. Auch ist es möglich, dass der Bildsensor für den UV-Bereich des elektromagnetischen Spektrums und/oder für den IR-Bereich des elektromagnetischen Spektrums geeignet oder ausgebildet ist.

Die Kameras 7-10 sind gemäß Figur 1 so an dem Ausleger 4 angeordnet und ein- bzw. ausgerichtet, dass jede Kamera 7-10 einen Aufnahmebereich abdeckt, welcher die Ausbringbereiche von zwei Ausbringeinrichtungen 5 umfasst bzw. abdeckt. Somit werden also weniger Kameras als Ausbringeinrichtungen 5 benötigt. Dies spart Kosten und Montageaufwand. Außerdem wird dadurch die Maschine vereinfacht.

Die Ausrichtkontrolleinrichtung 6 erzeugt ein für Kameras 7-10 der landwirtschaftlichen Maschine 1 erkennbares Signal S. Bei diesem Signal S handelt es sich um ein Signal im sichtbaren Bereich des elektromagnetischen Spektrums.

Außerdem ist die Ausrichtkontrolleinrichtung 6 so eingerichtet und ausgebildet, dass diese ein für die Kameras 7-10 der landwirtschaftlichen Maschine 1 erkennbares geometrisches Signal S erzeugt. Gemäß Figur 1 ist das erkennbare Signal S eine Linie.

Zudem ist die Ausrichtkontrolleinrichtung 6 so eingerichtet und ausgebildet ist, dass das erkennbare Signal S auf einen Boden erzeugt wird.

Wie in Figur 1 zu erkennen, ist die Ausrichtkontrolleinrichtung 6 am Rahmen 2 angeordnet und umfasst eine Projektionseinrichtung 11, welche ein für Kameras 7-10 der landwirtschaftlichen Maschine 1 erkennbares Signal S in den Aufnahmebereich jeder Kamera 7-10 projiziert.

Auch hat laut Figur 1 die Ausrichtkontrolleinrichtung 6 eine Auswerteeinrichtung 12 zum Auswerten von Ist-Bilddaten, aufgenommen von den Kameras 7-10 der landwirtschaftlichen Maschine 1. Dabei ist die Auswerteeinrichtung 12 eingerichtet und ausgebildet ist, aus den Ist-Bilddaten jeder Kamera 7-10 das erkennbare Signal S, erzeugt von der Ausrichtkontrolleinrichtung 6 bzw. von deren Projektionseinrichtung 11, zu erkennen bzw. herauszufiltern.

Des Weiteren ist die Auswerteeinrichtung 12 eingerichtet und ausgebildet, anhand des erkennbaren bzw. erkannten Signals S diejenigen Pixel eines Bildsensors einer jeden Kamera 7-10 der landwirtschaftlichen Maschine 1 zu identifizieren, die das erkennbare Signal S erfassen. Dadurch ist jedes Pixel des Bildsensors, das ein erkennbares Signal S erkennt, mit seinen Koordinaten auf dem Bildsensor erfassbar.

Zudem ist die Auswerteeinrichtung 12 eingerichtet und ausgebildet, zu prüfen, ob die identifizierten Pixel entlang einer Pixelreihe des Bildsensors und innerhalb eines Toleranzbereichs um die Pixelreihe angeordnet sind. Dabei hat jeder Bildsensor Pixel, die in Pixelreihen und Pixelspalten angeordnet sind. Für den Fall, dass die identifizierten Pixel entlang einer Pixelreihe des Bildsensors und innerhalb eines Toleranzbereichs um die Pixelreihe angeordnet sind, bedeutet dies, dass das Gestänge 3 bzw. Ausleger 4 relativ zum Rahmen 2 korrekt positioniert ist.

Auch ist die Auswerteeinrichtung 12 eingerichtet und ausgebildet, im Falle einer Anordnung der identifizierten Pixel außerhalb des Toleranzbereichs um die Pixelreihe eine Fehlermeldung zu initiieren. Für den Fall, dass die identifizierten Pixel entlang einer Pixelreihe des Bildsensors und außerhalb des Toleranzbereichs um die Pixelreihe angeordnet sind, bedeutet dies, dass das Gestänge 3 bzw. dessen Ausleger 4 relativ zum Rahmen 2 nicht korrekt positioniert ist.

Außerdem ist die Auswerteeinrichtung 12 eingerichtet und ausgebildet, bei Ausgabe einer Fehlermeldung auf Maßnahmen zur Beseitigung der Verformung des Gestänges 3 oder des Auslegers 4 hinzuweisen. Somit können einem Anwender Vorschläge dahingehend unterbreitet werden, z. B. welche Kalibrierschrauben an der landwirtschaftlichen Maschine 1 nachzustellen sind oder welche Lagerungen der landwirtschaftlichen Maschine 1 zu tauschen sind, um wieder eine perfekte Ausrichtung des Gestänges 3 oder des Auslegers 4 relativ zum Rahmen 2 zu erzeugen.

### Bezugszeichenliste

- 1: Landwirtschaftliche Maschine
- 2: Rahmen
- 3: Gestänge
- 4: Ausleger
- 5: Ausbringeinrichtung
- 6: Ausrichtkontrolleinrichtung
- 7: Kamera
- 8: Kamera
- 9: Kamera
- 10: Kamera
- 11: Projektionseinrichtung
- 12: Auswerteeinrichtung
- 13: Speicher

- S: erkennbares Signal
- Z: Zugmaschine

## Patentansprüche

1. Landwirtschaftliche Maschine (1) zum Ausbringen von Spritzflüssigkeit oder körnigem Material aufweisend:
- einen Rahmen (2) zur Anordnung an einer Zugmaschine,
- ein Gestänge (3) mit mindestens einem Ausleger (4) zum Verringern und/oder Vergrößern der Arbeitsbreite der landwirtschaftlichen Maschine (1),
- wobei der wenigstens eine Ausleger (4) mehrere Teilsegmente aufweist, die zueinander schwenkbar und/oder klappbar sind, um die Arbeitsbreite der landwirtschaftlichen Maschine (1) zu verringern und/oder zu vergrößern,
- Ausbringeinrichtungen (5) zum Ausbringen von Spritzflüssigkeit, die an dem mindestens einen Ausleger (4) angeordnet sind,
- wobei jede Ausbringeinrichtung (5) eingerichtet ist, innerhalb ihres Ausbringbereichs Spritzflüssigkeit oder körniges Material auszubringen,
**dadurch gekennzeichnet, dass**
die landwirtschaftliche Maschine (1) eine Ausrichtkontrolleinrichtung (6) für den mindestens einen Ausleger (4) aufweist, um die Position und/oder Ausrichtung des mindestens einen Auslegers (4) relativ zum Rahmen (2) zu kontrollieren.

2. Landwirtschaftliche Maschine nach Anspruch 1,
- wobei die landwirtschaftliche Maschine (1) Kameras (7-10) zur Erfassung eines Feldbewuchses aufweist, und
- wobei die Kameras (7-10) an dem mindestens einen Ausleger (4) angeordnet sind,
- wobei jede Kamera (7-10) wenigstens einen Bildsensor für den sichtbaren Bereich des elektromagnetischen Spektrums umfasst,
und/oder
- wobei die Kameras (7-10) so an dem mindestens einen Ausleger (4) angeordnet und ausgerichtet sind, dass jede Kamera (7-10) einen Aufnahmebereich abdeckt, welcher die Ausbringbereiche von wenigstens zwei Ausbringeinrichtungen (5) abdeckt.

3. Landwirtschaftliche Maschine nach Anspruch 1 oder 2,
- wobei die Ausrichtkontrolleinrichtung (6) so eingerichtet und ausgebildet ist, dass diese ein für Kameras (7-10) der landwirtschaftlichen Maschine (1) erkennbares Signal erzeugt,
- wobei das erkennbare Signal (S) eine Linie, ein QR-Code und/oder ein Symbol ist,
und/oder
- wobei die Ausrichtkontrolleinrichtung (6) so eingerichtet und ausgebildet ist, dass das erkennbare Signal (S) auf einen Boden oder auf Kameras (7-10) der landwirtschaftlichen Maschine (1) selbst erzeugt wird.

4. Landwirtschaftliche Maschine nach einem der vorangehenden Ansprüche,
- wobei die Ausrichtkontrolleinrichtung (6) eine Projektionseinrichtung (11) umfasst, welche ein für Kameras (7-10) der landwirtschaftlichen Maschine (1) erkennbares Signal (S) in den Aufnahmebereich jeder Kamera (7-10) projiziert,
oder
- wobei die Ausrichtkontrolleinrichtung (6) eine Projektionseinrichtung (11) umfasst, welche ein für Kameras (7-10) der landwirtschaftlichen Maschine (1) erkennbares Signal (S) unmittelbar auf die Kameras (7-10) der landwirtschaftlichen Maschine (1) projiziert.

5. Landwirtschaftliche Maschine nach einem der vorangehenden Ansprüche,
- wobei die Ausrichtkontrolleinrichtung (6) eine Auswerteeinrichtung (12) zum Auswerten von Ist-Bilddaten, aufgenommen von Kameras (7-10) der landwirtschaftlichen Maschine (1), aufweist, und
- wobei die Auswerteeinrichtung (12) eingerichtet und ausgebildet ist, aus den Ist-Bilddaten jeder Kamera (7-10) der landwirtschaftlichen Maschine (1) ein erkennbares Signal (S), erzeugt von der Ausrichtkontrolleinrichtung (6) oder deren Projektionseinrichtung (11), zu erkennen.

6. Landwirtschaftliche Maschine nach Anspruch 5,
- wobei die Auswerteeinrichtung (12) eingerichtet und ausgebildet ist, anhand des erkennbaren Signals (S) diejenigen Pixel eines Bildsensors einer jeden Kamera (7-10) der landwirtschaftlichen Maschine (1) zu identifizieren, die das erkennbares Signal (S) erfassen, wodurch jedes Pixel des Bildsensors, das ein erkennbares Signal (S) erkennt, mit seinen Koordinaten auf dem Bildsensor erfassbar ist, und
- wobei die Auswerteeinrichtung (12) eingerichtet und ausgebildet ist, zu prüfen, ob die identifizierten Pixel entlang einer Pixelreihe des Bildsensors und innerhalb eines Toleranzbereichs um die Pixelreihe angeordnet sind.

7. Landwirtschaftliche Maschine nach einem der vorangehenden Ansprüche,
- wobei die Ausrichtkontrolleinrichtung (6) eine Auswerteeinrichtung (12) zum Auswerten von Ist-Bilddaten, aufgenommen von Kameras (7-10) der landwirtschaftlichen Maschine (1), und/oder von Soll-Bilddaten aufweist,
- wobei die Auswerteeinrichtung (6) einen Speicher (13) für Ist- und/oder Soll-Bilddaten umfasst,
- wobei die Auswerteeinrichtung (12) eingerichtet und ausgebildet ist, Ist-Bilddaten mit Soll-Bilddaten zu vergleichen, um Abweichungen des Gestänges (3) oder des mindestens einen Auslegers (4) zu identifizieren,
- wobei die Soll-Bilddaten von Kameras (7-10) der landwirtschaftlichen Maschine (1) vor Auslieferung der landwirtschaftlichen Maschine (1) und/oder bei Herstellung der landwirtschaftlichen Maschine (1) aufgenommen wurden und anschließend in dem Speicher (13) hinterlegt wurden,
oder
- wobei die Soll-Bilddaten mit einer computerunterstützten Methode für die landwirtschaftliche Maschine (1) erzeugt und anschließend in dem Speicher (13) hinterlegt wurden.
